# EUROPÄISCHE PATENTSCHRIFT

(11) **EP 1 770 217 B1**
(45) Veröffentlichungstag und Bekanntmachung des Hinweises auf die Patenterteilung: **19.03.2008**
(21) Anmeldenummer: 06405327.5
(22) Anmeldetag: 31.07.2006
(51) Int. Cl.: E01F 9/011, F16M 11/00

(54) **Stativ für ein Faltsignal**
Tripod for folding sign
Trépied pliable pour signalétique

(30) Priorität: 30.09.2005 CH 15842005
(43) Veröffentlichungstag der Anmeldung: 04.04.2007
(73) Patentinhaber: Triopan Dähler AG, 9401 Rorschach (CH)
(72) Erfinder: Kleger, Alexander, 9401 Rorschach (CH)
(74) Vertreter: Gachnang, Hans Rudolf

(56) Entgegenhaltungen:
- US-A- 2 901 767
- US-A- 4 606 525

## Beschreibung

Gegenstand der Erfindung ist ein Stativ für ein Faltsignal gemäss Oberbegriff des Patentanspruchs 1. US 4 606 525 offenbart ein Stativ mit einem Verriegelungselement, das eine Schraubzwinge aufweist, die von Hand verdreht werden muss.
Faltsignale, meist als Dreibeinstativ ausgestaltet, können mit dem Verwendungszweck angepassten Signalen (Pictogramme) versehen werden. Diese Pictogramme sind auf die drei Seiten einer Hülle mit pyramidenförmiger Form aufgedruckt. Getragen wird die Hülle durch ein faltbares Stativ, umfassend drei gelenkig miteinander verbundene Beine. Die Beine werden bei höherwertigen Faltsignalen durch einen Federmechanismus in Gebrauchsstellung gespreizt gehalten. Die Kraft der Feder ist derart bemessen, dass sie das Faltsignal unter Normalbedingungen in gespreizter Position hält und dass das Faltsignal ohne grosse Mühe nach Gebrauch zusammenfaltbar ist, d.h. die Beine parallel gestellt werden können. Letzteres bedeutet aber, dass die Feder nicht derart kräftig bemessen werden kann, um das Faltsignal bei grossen Windstärken, hervorgerufen durch stürmische Winde oder Fahrtwinde von Fahrzeugen, gespreizt zu halten. Folglich tendiert das Faltsignal, zusammengedrückt zu werden, wodurch sich die Standfläche der Beine verkleinert und das Faltsignal umfallen kann.

Eine Aufgabe der vorliegenden Erfindung ist die Schaffung eines Stativs mit einer Feder, die genügt, um das Stativ bzw. Faltsignal leicht öffnen zu können und offenzuhalten, das aber auch ohne grossen Kraftaufwand geschlossen werden kann und das auch bei starker Anströmung nicht zusammengefaltet wird und umfällt

Gelöst wird diese Aufgabe durch ein Stativ mit den Merkmalen des Anspruchs 1. Vorteilhafte Ausgestaltungen des Stativs sind in den abhängigen Ansprüchen umschrieben.

Es gelingt, mit einem einzigen zusätzlichen und zudem kostengünstigen Verriegelungselement einen Schliessschutz zu schaffen, welcher das Schliessen bzw. Zusammenfalten des Faltsignals nur nach Entriegelung des Schliessschutzes ermöglicht.

Anhand eines durch Figuren illustrierten Ausführungsbeispiels wird die Erfindung näher erläutert.

### Es zeigen

- Figur 1: eine Teilansicht eines herkömmlichen Stativs für ein Faltsignal,
- Figur 2: einen Schnitt durch einen Verbindungsstab längs Linie A-A in Figur 1,
- Figur 3: eine Teilansicht des erfindungsgemässen Stativs mit eingeschwenktem Bein,
- Figur 4: eine Ansicht des oberen Teils des Stativs aus Richtung Y in Figur 3,
- Figur 5: eine Teilansicht des geöffneten Stativs mit einem Schliessschutz,
- Figur 6: eine Ansicht des geschlossenen Stativs mit einem Schliessschutz und
- Figur 7: eine Ansicht auf das geschlossene Stativ aus Richtung X in Figur 6.

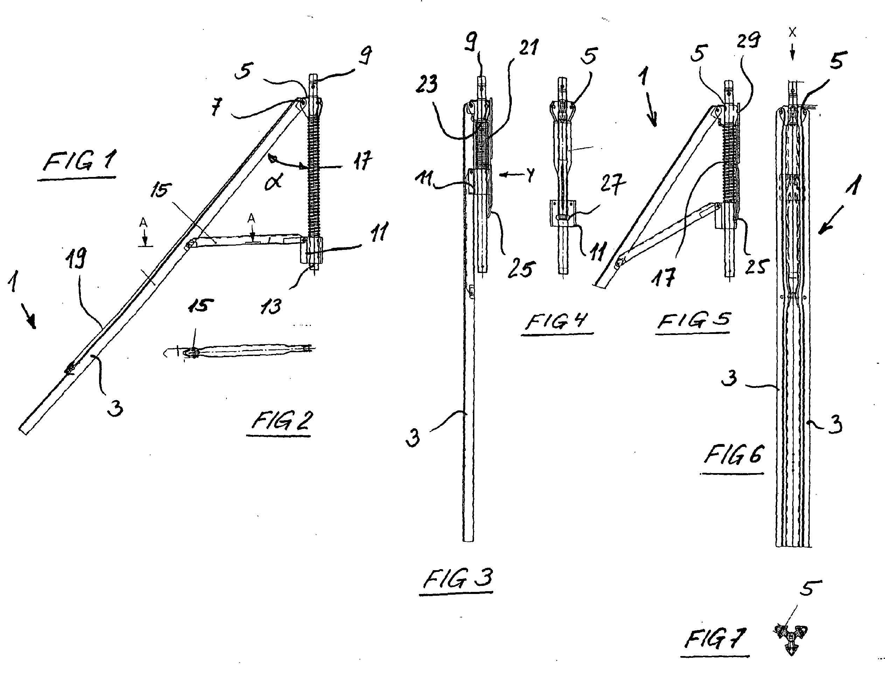

Im Teilschnitt eines geöffneten Stativs 1, wie es in den Figuren 1 und 5 dargestellt ist, ist mit Bezugszeichen 3 eines der drei Beine bezeichnet. Jedes der drei Beine 3, es könnten auch vier sein, wobei allerdings dann eine plane Standfläche Voraussetzung wäre, ist mit seinem oberen Ende mit einem Gelenkelement 5 verbunden. Die Verbindung erfolgt durch eine Schraube 7 oder einen entsprechend ausgebildeten Bolzen. Das Gelenkelement 5 ist unverschiebbar mit einer Führungsstange 9 verbunden. Auf der Führungsstange 9 sitzt ein Schiebegelenk 11, welches durch einen in der Führungsstange 9 befestigten Bolzen 13 daran gehindert wird, unten aus der Führungsstange 9 herauszugleiten. Zwischen dem Bein 3 und den Schiebegelenk 11 ist, mit beiden Teilen gelenkig verbunden, ein Verbindungsstab 15 eingesetzt. Der Verbindungsstab 15 dient dazu, den maximalen Öffnungswinkel alpha zwischen der Führungsstange 9 und dem Bein 3 zu begrenzen. Zwischen dem Gelenkelement 5 und dem Schiebegelenk 11 ist, die Führungsstange 9 umschlingend, eine Schraubenfeder 17 eingesetzt. In der Darstellung des geöffneten Stativs gemäss Figur 1, die den Stand der Technik darstellt, ist die Feder 17 im wesentlichen entspannt. Sie drückt das Schiebegelenk 11 bis an den Bolzen 13.
Am Bein 3 ist, mit einer Linie 19 eine Hülle angedeutet, welche eine pyramidenförmige Gestalt aufweist und die Signalisationszeichen trägt.

In den Darstellungen gemäss den Figuren 3 bis 7 ist ein Schliessschutz mit einem Verriegelungselement dargestellt, welcher ein bandförmiges Blech 21 umfasst, dessen oberes Ende 23 abgekröpft ist, ein Loch umfasst und von der Führungsstange 9 durchdrungen wird. Das untere Ende 25 ist hakenförmig ausgebildet und greift bei gespreizten Beinen 3 des Stativs 1 in eine entsprechend ausgebildete Ausnehmung 27 im Schiebegelenk 11 ein (vergleiche Figuren 4 und 5). Das Blech 21 bzw. das hakenförmige untere Ende 25 wird durch die Kraft der Feder 17 in die Ausnehmung 27 hineingedrückt, weil das obere abgekröpfte Ende 23 von der Feder 17 an das Gelenkelement 5 angepresst wird. Unterstützend könnte zusätzliche ein das Gelenkelement 5 überragender, mit dem Blech 21 verbundener elastischer Lappen 29 das Anpressen des hakenförmigen Endes 25 unterstützen (vergleiche Figur 5).
Bei geschlossenem, d.h. zusammengeklapptem Stativ 1 wird die Feder 17 zusammengepresst (Figuren 3 und 4) und das abgekröpfte untere Ende 25 des Blechs 21 liegt, weil das Schiebegelenk 11 aus dem Wirkbereich des unteren Endes 25 herausgeführt ist, uneingehakt an der Führungsstange 9 an.

Beim Öffnen des Stativs rastet das hakenförmige Ende 25 ohne weiteres Dazutun am Schiebegelenk 11 ein und hält das Stativ 1 in der gespreizten Stellung. Diese kann nur rückgängig gemacht werden, wenn von Hand das hakenförmige Ende 25 radial aus der Ausnehmung 27 herausgehoben und gleichzeitig die drei Beine des Stativs 1 zusammengeklappt werden.

## Patentansprüche

1. Stativ (1) für ein Faltsignal, umfassend gelenkig über ein Gelenkelement (5) miteinander verbundene Beine (3), eine Führungsstange (9), mit deren oberen Ende das Gelenkelement (5) verbunden ist, ein Schiebegelenk (11), welches auf der Führungsstange (9) verschiebbar geführt ist, Verbindungsstäbe (15) deren erstes Ende gelenkig am Schiebegelenk (11) und deren zweites Ende je mit einem Bein (3) verbunden ist, **dadurch gekennzeichnet, dass** das Stativ eine die Führungsstange (9) umschlingende Schraubenfeder (17) umfasst, welche zwischen dem Gelenkelement (5) und dem Schiebegelenk (11) eingesetzt ist, wobei zwischen dem am Gelenkelement (5) anliegenden Ende der Schraubenfeder (17) und dem Gelenkelement (5) ein abgekröpftes oder abgewinkeltes oberes Ende (23) eines Verriegelungselementes (21,25,29) eingespannt ist und das freie untere Ende (25) des stabförmigen Verriegelungselementes (21,25,29) hakenförmig ausgebildet ist, derart, dass bei geöffnetem Stativ (1) das freie untere Ende (25) durch die Kraft der Schraubenfeder (17) in Richtung auf die Führungsstange (9) gepresst wird und am Schiebegelenk (11) einhakt.

2. Stativ nach Anspruch 1, **dadurch gekennzeichnet, dass** das Verriegelungselement (21,25,29) als ein bandförmiges Blech (21) ausgebildet ist, dessen oberes abgekröpftes Ende (23) ein Loch aufweist, durch welches die Führungsstange (9) hindurchgeführt ist.

3. Stativ nach einem der Ansprüche 1 oder 2, **dadurch gekennzeichnet, dass** das hakenförmige untere Ende (25) des Verriegelungselements (21,25,29) in eine Ausnehmung (27) am Schiebegelenk eingreift.

4. Stativ nach einem der Ansprüche 1 bis 3, **dadurch gekennzeichnet, dass** am Verriegelungselement (21,25,29) ein nach oben vom oberen Ende (23) gerichteter Lappen (29) angebracht ist, welcher am Gelenkelement (5) anliegt.

## Claims

1. A tripod for a folding sign, comprising legs (3) which are connected to one another in an articulated manner via a joint element (5), a guide rod (9) to whose upper end the joint element (5) is connected, a sliding joint (11) which is displaceably guided on the guide rod (9), connection rods (15) whose first end is connected to the sliding joint (11) in an articulated manner and whose second end is connected in each case to a leg (3), **characterized in that** the tripod comprises a helical spring (17) which winds around the guide rod (9) and which is inserted between the joint element (5) and the sliding joint (11), wherein a right-angled or angled upper end (23) of a locking element (21, 25, 29) is clamped between that end of the helical spring (17) which bears on the joint element (5) and the joint element (5), and the free lower end (25) of the rod-like locking element (21, 25, 29) is designed in a hook-like manner and in a manner such that given an opened tripod (1), the free lower end (25) is pressed by the force of the helical spring (17) in the direction of the guide rod (9), and hooks in on the sliding joint (11).

2. A tripod according to claim 1, **characterised in that** the locking element (21, 25, 29) is designed as tape-like sheet metal (21) whose upper end (23) bent at right angles comprises a hole, through which the guide rod (9) is led.

3. A tripod according to one of the claims 1 or 2, **characterised in that** the hook-like lower end (25) of the locking element (21, 25, 29) engages into a recess (27) on the sliding joint.

4. A tripod according to one of the claims 1 to 3, **characterised in that** a tab (29) which is directed upwards from the upper end (23) and which bears on the joint element (5), is attached on the locking element (21, 25, 29).

## Revendications

1. Trépied (1) pour un panneau de signalisation pliant, comportant des branches (3) reliées les unes aux autres en articulation par l'intermédiaire d'un élément d'articulation (5), une tige de guidage (9), l'élément d'articulation (5) étant relié à l'extrémité supérieure de ladite tige, une articulation coulissante (11) qui est guidée en translation sur la tige de guidage (9), des tiges de liaison (15) dont la première extrémité est reliée en articulation sur l'articulation coulissante (11) et dont la seconde extrémité est reliée respectivement à une branche (3), **caractérisé en ce que** le trépied comporte un ressort cylindrique de compression (17) qui entoure la tige de guidage (9) et qui est mis en place entre l'élément d'articulation (5) et l'articulation coulissante (11), dans lequel une extrémité supérieure coudée ou pliée (23) d'un élément de verrouillage (21, 25, 29) est encastrée entre l'extrémité du ressort cylindrique de compression (17) venant s'appliquer sur l'élément d'articulation (5) et l'élément d'articulation (5), et **en ce que** l'extrémité inférieure libre (25) de l'élément de verrouillage en forme de tige (21, 25, 29) est réalisée en forme de crochet, de telle sorte que, lorsque le trépied (1) est ouvert, l'extrémité inférieure libre (25) est pressée en direction de la tige de guidage (9) par la force du ressort cylindrique de compression (17) et s'accroche à l'articulation coulissante (11).

2. Trépied selon la revendication 1, **caractérisé en ce que** l'élément de verrouillage (21, 25, 29) est réalisé comme une tôle en forme de bande (21) dont l'extrémité supérieure coudée (23) présente un trou à travers lequel la tige de guidage (9) est guidée.

3. Trépied selon l'une ou l'autre des revendications 1 et 2, **caractérisé en ce que** l'extrémité inférieure en forme de crochet (25) de l'élément de verrouillage (21, 25, 29) s'engage dans un évidement (27) sur l'articulation coulissante.

4. Trépied selon l'une des revendications 1 à 3, **caractérisé en ce qu'**une patte (29) dirigée vers le haut depuis l'extrémité supérieure (23) est montée sur l'élément de verrouillage (21, 25, 29), laquelle vient s'appliquer sur l'élément d'articulation (5).
